Europäisches Patentamt

European Patent Office

Office européen des brevets

(19)

(11) **EP 1 557 765 A1**

(12) **DEMANDE DE BREVET EUROPEEN**

(43) Date de publication:
**27.07.2005 Bulletin 2005/30**

(51) Int Cl.⁷: **G06F 13/364**

(21) Numéro de dépôt: **05368002.1**

(22) Date de dépôt: **14.01.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **19.01.2004 FR 0400418**

(71) Demandeur: **STMicroelectronics S.A.**
**92120 Montrouge (FR)**

(72) Inventeur: **Lehongre, Denis**
**38530 Pontcharra (FR)**

(74) Mandataire: **Schuffenecker, Thierry**
**97, chemin de Cassiopée,**
**Domaine de l'étoile**
**06610 La Gaude (FR)**

(54) **Procédé d'arbitrage hiérarchisé**

(57)    Procédé d'arbitrage d'un bus de données dans une architecture comportant n blocs fonctionnels, l'accès audit bus étant réglé par un bloc d'arbitrage. Le procédé comporte les éléments suivants :

- au moins un agent recevant d'un desdits blocs fonctionnels des informations via des primitives de haut niveau et qui génèrent chacun en réponse un vecteur de rang critique comportant au moins une première et une seconde composantes;
- un arbitre recevant les vecteurs de rang critique générés par lesdits agents en concurrence, ledit arbitre appliquant un mécanisme d'extraction de maximum ou de minimum sur au moins l'une des deux composantes des vecteurs de rang critique pour identifier de manière unique le bloc accédant à ladite ressource.

Ainsi on arrive à dissocier les blocs fonctionnels de la commande de l'arbitrage, laquelle est à présent spécifiquement dévolue aux agents qui la mettent en oeuvre.

Fig. 2

EP 1 557 765 A1

## Description

### Domaine technique de l'invention

La présente invention concerne les systèmes de transport de données intégrés dans un produit semi-conducteur communicant via un dispositif de transfert de donnée, et notamment un procédé d'arbitrage dans une architecture comportant différentes unités fonctionnelles.

### Etat de la technique

Avec le développement de l'industrie microélectronique, de plus en plus de fonctions sont intégrées au sein d'un même produit semi-conducteur, qu'il s'agisse de fonctions de télécommunication (Ethernet, communications sans fil), ou de traitement de données sophistiquées, le plus souvent avec l'appui de processeurs sophistiqués pour le traitement du signal.

Le développement de systèmes complets, embarqués sur une même puce, se généralise. Ces systèmes, désignés sous l'appellation anglo-saxonne de *on-chip systems (SOC)* intègrent au sein d'un même produit semi-conducteur de multiples fonctions et notamment des fonctions multimédias avancées, et l'on rencontre même des téléphones offrant des traitements audio sophistiqués, tels que la lecture MP3 (mpeg1 layer 3).

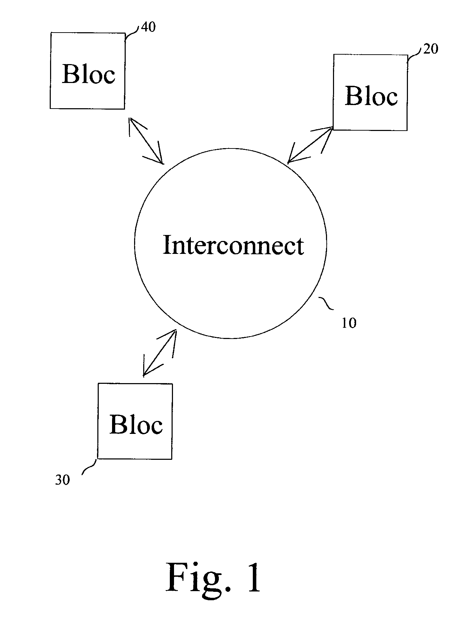

L'accumulation de divers blocs fonctionnels au sein d'un même circuit pose le problème de l'inter-communicabilité de ces mêmes blocs fonctionnels, laquelle est en général assurée par un dispositif de transport de données que l'on désigne communément sous l'appellation anglo-saxonne de *Interconnect,* géré par un mécanisme d'arbitrage, comme cela est représenté sur la figure 1, où l'on voit un interconnect 10 communiquer avec trois blocs fonctionnels 20, 30 et 40, respectivement.

L'évolution des technologies et le renouvellement constant des produits de consommation impose de concevoir à nouveau, en permanence, l'architecture générale des systèmes et, d'une manière générale avec les systèmes connus, il faut revoir à chaque fois la totalité de l'architecture et notamment le mécanisme d'arbitrage de l'interconnect qui en est un élément essentiel.

Il en résulte une grosse perte de temps pour les équipes de développement, laquelle est préjudiciable au renouvellement des gammes de produits et à la rapidité de mise sur le marché de nouveaux produits.

Il serait souhaitable de pouvoir normaliser certains aspects de l'architecture des systèmes embarqués sur puce, notamment afin de faciliter la réutilisation de la fonction d'arbitrage de l'interconnect au sein d'un système embarqué complet, pour permettre des modifications faciles de cette même architecture.

### Exposé de l'invention

Le but de la présente invention consiste à faciliter la conception des systèmes embarqués sur puce, au moyen d'un protocole d'arbitrage de l'interconnect normalisé et facilement réutilisable pour de nouveaux blocs fonctionnels.

Le but de la présente demande consiste à optimiser l'architecture d'un système de traitement de données au moyen d'un nouveau mécanisme d'arbitrage permettant l'inter-communicabilité des blocs fonctionnels existant dans l'architecture.

Un autre but de la présente invention consiste à proposer un protocole normalisé d'arbitrage et de gestion de ressources d'un interconnect au sein d'un système embarqué sur puce (*on-chip system*).

L'invention réalise ces buts au moyen d'un procédé d'arbitrage d'un bus de données dans une architecture comportant n blocs fonctionnels, l'accès audit bus étant réglé par un bloc d'arbitrage.

Le procédé comporte les éléments suivants :

- au moins un agent recevant d'un desdits blocs fonctionnels des informations via des primitives de haut niveau et qui génèrent chacun en réponse un vecteur de rang critique comportant au moins une première et une seconde composante ;
- un arbitre recevant les vecteurs de rang critique générés par lesdits agents en concurrence, ledit arbitre appliquant un mécanisme d'extraction de maximum ou de minimum sur au moins l'une des deux composantes des vecteurs de rang critique pour identifier de manière unique le bloc accédant à ladite ressource.

Ainsi on arrive à dissocier les blocs fonctionnels de la commande de l'arbitrage, laquelle est à présent spécifiquement dédiée aux agents qui la mettent en oeuvre.

Il en résulte ainsi une rationalisation d'une fonction essentielle présente dans les systèmes sur puce, à savoir la fonction d'arbitrage. On peut grâce à l'invention envisager l'utilisation et la réutilisation, sans aucune modification, de blocs fonctionnels standardisés qui communiqueront aisément avec le dispositif de transport de données ou l'interconnect.

De préférence, le protocole de haut niveau comporte des commandes permettant la transmission d'information-tion relative à une quantité de données à transmettre, un temps, un débit ou des informations de latence minimale.

Dans un mode de réalisation particulier, le protocole de haut niveau comporte une commande permettant une purge destinée à la purge d'une mémoire FIFO contenue dans l'un desdits agents.

L'invention est particulièrement adaptée à la mise en oeuvre d'un extracteur de maximum ou de minimum, notamment basé sur une fonction de conversion (transformée en T) de chacune des composantes dudit vecteur de rang critique, chaque composante étant sous la forme **B[n-1] B[n-2] .... B[2] B[1] B[0],** la fonction de conversion opérant sur un ensemble d'éléments dans lequel une relation d'ordre est définie et transformant chaque élément en un nombre binaire composé de $2^n-1$ éléments binaires **T[x]** avec $x = 1$ à $2^n-1$ :

$$T[2^n-1] \ T[2^n-2] \ ... \ T[x] \ ... \ T[2] \ T[1]$$

Dans lequel on a $T(x) = 0$ lorsque $x$ est strictement supérieur à R et $T(x)=1$ lorsque $x$ est inférieur ou égal à R, a R étant le rang du vecteur **B[n-1] B[n-2] .... B[2] B[1] B[0]** dans ladite relation d'ordre.

Alternativement, l'invention permet la réalisation d'une architecture de produit semi-conducteur (ou on-chip system) comportant un ensemble de blocs fonctionnels organisés autour d'un dispositif de transport de données ou «interconnect». Chaque bloc fonctionnel sollicite de manière concurrente l'accès au dispositif de transport de données au moyen d'un agent qui reçoit des informations dudit bloc via un protocole de haut niveau comportant au moins des informations de débit ou de temps. L'agent interprète ces informations et génère un vecteur de rang critique comportant au moins deux composantes, lequel pourra être aisément manipulé par le mécanisme d'arbitrage.

**Description des dessins**

D'autres caractéristiques, but et avantages de l'invention apparaîtront à la lecture de la description et des dessins ci-après, donnés uniquement à titre d'exemples non limitatifs. Sur les dessins annexés :

La figure 1 illustre la communication d'un ensemble de blocs fonctionnels disposés sur un même produit semi-conducteur et communicant via un interconnect.

La figure 2 illustre l'organisation de la fonction d'arbitrage au sein du système illustré dans la figure 1.

La figure 3 illustre la génération d'un vecteur de rang critique au sein d'un agent conformément à l'invention.

Les figures 4 et 5 illustrent le procédé d'extraction d'un maximum dans le mécanisme d'arbitrage.

**Description d'un mode de réalisation préféré**

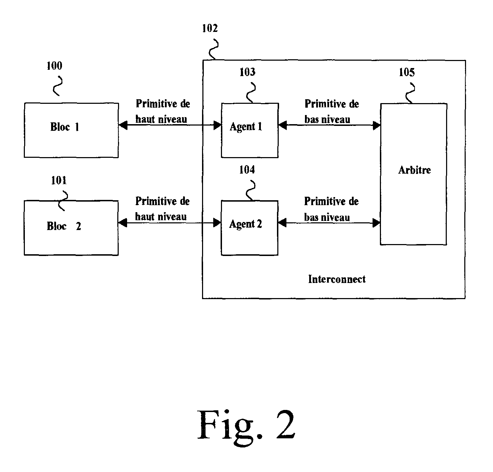

La figure 2 illustre l'organisation de la fonction d'arbitrage au sein du même système. On a représenté deux blocs fonctionnels, respectivement un bloc 100 et un bloc 101, qui communiquent avec un Interconnect ou dispositif de transfert de donnée 102 via un ensemble de primitives d'arbitrage de haut niveau que l'on exposera ci-après. Il est à noter que l'architecture qui va être décrite est applicable à tout type de système et tout type de communication, qu'il s'agisse de communications entre plusieurs unités de calcul, d'accès à une même ressource telle qu'une mémoire partagée etc...

Chaque bloc fonctionnel 100 ou 101 communique directement avec un agent qui lui est dédié, respectivement un agent 103 et un agent 104 et ce, au moyen d'un lien de communication quelconque, série, parallèle, par couplage optique etc....

Les agents 103 et 104 ont pour fonction essentielle de traduire un ensemble de commandes organisées en primitives de haut niveau, reçues des blocs fonctionnels 100 et 101, en une primitive de bas niveau qui peut être directement manipulée par un mécanisme d'arbitrage quelconque, symbolisé par un arbitre 105 sur la figure 2. L'ensemble des primitives de haut niveau échangées entre le bloc et son agent dédié constitue un lien de communication bidirectionnelle permettant notamment à l'agent de transmettre des informations de feedback sur les commandes reçues et exécutées.

On réalise de cette manière une simplification considérable de l'une des fonctions essentielles au sein d'une même puce, à savoir l'inter-communication entre les différents blocs fonctionnels qui communiquent via un même interconnect 102.

I. Protocole de haut niveau

Les primitives de haut niveau sont destinées à être normalisés, au moins en pratique, ce qui assure aux équipes de développement de pouvoir intégrer sans difficulté tout nouveau bloc fonctionnel au sein d'une architecture déjà existante. Les primitives de haut niveau permettent la communication d'informations entre chaque bloc fonctionnel (101 par exemple) et son agent dédié , et plus spécifiquement le transfert de commandes exprimant des besoins en performance et transmises par le bloc fonctionnel associé : volume de données à transférer, besoins en terme de débit et de temps de transfert des données etc...

Dans la nouvelle architecture qui est proposée, ce sera l'agent dédié à ce même bloc qui traduira cette information en une ou plusieurs composantes correspondantes dans le vecteur de rang critique qui sera transmis à l'arbitre. A cet effet, l'agent pourra utiliser d'autres informations permettant cette conversion, et notamment le niveau de remplissage de sa propre FIFO interne.... Ainsi, en fonction de l'état de remplissage de cette dernière, une même commande de débit présentée par un bloc fonctionnel donné pourra être traduite différemment au niveau du vecteur de rang critique généré par l'agent.

On se rend compte de la grande flexibilité du système, qui permet à des composants autonomes, tels que les agents 103 et 104, de moduler les besoins en fonction d'une situation donnée et de transmettre à l'arbitre 105 des informations directement exploitables par ce dernier, comme on le verra ci-après.

Dans un mode de réalisation préféré, on utilise une commande de débit en émission permettant d'assurer l'écoulement d'un débit moyen vers l'agent. De la même manière, le protocole de haut niveau comporte une commande de débit en réception permettant d'assurer la réception d'un débit moyen.

Dans un mode de réalisation particulier, on ajoute dans le protocole de haut niveau des commandes de purge (dites PURGE ou FLUSH) permettant de purger au-delà d'un temps prédéfini la mémoire FIFO que comporte l'agent. Ces commandes peuvent être directement traitées par l'agent de manière à produire et à générer un vecteur de rang critique adéquat, dirigé vers le bloc d'arbitrage 105.

De préférence, le protocole de haut niveau comporte une commande permettant de définir une requête de traitement avec une latence minimale afin d'assurer au plus vite l'allocation du bus de données à un bloc fonctionnel qui en fait la demande.

Dans un mode de réalisation préféré, le protocole de haut niveau comporte une commande permettant de définir une requête de traitement dans la bande restante, de manière à permettre l'allocation du bus de données uniquement lorsque les requêtes avec latence minimale formulées par les autres agents ont été satisfaites.

Les diverses commandes sont reçues par les agents qui mettent en oeuvre une stratégie appropriée pour générer un vecteur de rang critique adéquat permettant la régulation du flux.

Dans un souci d'illustration, on décrit à présent un mode spécifique de réalisation comportant un ensemble de quinze commandes, qu'un homme du métier pourra adapter à souhait à une application spécifique donnée.

Une première commande générée par le bloc fonctionnel sert à définir une quantité maximale de données à transmettre par l'interconnect vers une destination.

Une deuxième commande générée par le bloc sert à définir le temps maximum de fin de transfert des données jusqu'à destination.

Une troisième commande définit le temps total pendant lequel le bloc ne pourra pas transmettre, à l'agent, de données lors du transfert total.

Une quatrième commande précise les débits maximum et minimum des données transmises entre le bloc et l'agent.

Une cinquième commande définit la quantité minimale et maximale des données envoyées en salve par le bloc.

Une sixième commande définit la durée maximale ou minimale entre deux salves de données.

Une septième commande définit le nombre maximal de salves durant le transfert.

Une huitième commande définit le temps maximal d'attente d'une donnée dans une partie quelconque de l'interconnect avant d'arriver à destination.

Une neuvième commande définit la taille exacte de la prochaine salve de données à transmettre.

Une dixième commande définit la durée exacte avant la prochaine salve de donnée à transmettre. Ces commandes sont particulièrement utiles pour l'agent qui peut planifier les débits à transmettre et en déduire une stratégie adéquate de génération de vecteurs de rang critique.

Une onzième commande spécifie une quantité minimale de stockage temporaire, libre, requise dans l'agent pour stocker toutes les données transférées par le bloc.

Une douzième commande spécifie une quantité minimale de données disponibles dans l'agent, prêtes à être fournies à tout moment au bloc.

Une treizième commande appelée «purge» spécifie l'écoulement forcé des données en transit ou en attente de transit dans l'interconnect, en un temps maximum défini.

Une quatorzième commande spécifie l'écoulement forcé des données en transit dans l'interconnect et la destruction des données en attente de transit dans l'agent, en un temps maximum défini.

Une quinzième commande définit la mise à jour d'un des paramètres déjà listés aux fins de modifier l'exécution d'une commande précédemment reçue.

Le jeu de commandes précédentes, et notamment les trois premières qui visent à définir le volume de données à transmettre et le temps maximum de transfert des données, est particulièrement utile dans certaines applications qui requièrent un traitement spécifique en un temps prédéfini, tel que par exemple les applications de traitement vidéos ou le décodage mpeg.

Plus spécifiquement, les commandes précédentes pourront être également complétées par des commandes associées à des niveaux de priorité, lesquels permettront de déterminer une hiérarchie entre les différentes commandes à traiter.

On constate, et c'est l'un des apports considérables de l'invention, que l'on sépare nettement les contraintes systèmes, exprimées par les blocs fonctionnels, de la mise en oeuvre pratique du contrôle du mécanisme d'arbitrage, qui est à présent dévolu aux agents.

En outre, en séparant nettement le contrôle de l'arbitrage des blocs fonctionnels, on peut permettre la mise au point de stratégies adaptées et aboutir à un degré de sophistication des agents qui pourront alors permettre une régulation optimale de l'allocation de ressources du bus de données ou de l'interconnect - lequel échappe à présent aux blocs fonctionnels - et, finalement, une fluidité dans les transferts de flux via le bus de données.

De plus, l'agent pourra utiliser des compteurs ou des décompteurs à chargement parallèle pour satisfaire les commandes émises par le bloc. Il pourra, avec l'aide de ces compteurs, connaître la quantité de données à transmettre, le nombre de salves restantes, le temps restant jusqu'à la prochaine réception d'une donnée, le temps restant avant qu'une donnée soit impérativement transmise, etc... Ainsi, l'agent pourra calculer en permanence, à partir de tous ces éléments, par exemple au moyen d'une ALU ou de tout autre moyen, les valeurs de chacune des composantes du vecteur de rang critique. La courbe représentant l'ensemble des valeurs d'une composante pouvant ressembler à une succession de rampes, de périodes et de niveaux variables avec des paliers plus ou moins longs.

II. Protocole de bas niveau

Suivant l'un des principes de l'invention, les agents 103 et 104 négocient avec l'arbitre 105 l'allocation de ressources au moyen de primitives de bas niveau qui sont basées sur un vecteur de rang critique composé d'un nombre n de composantes comportant des valeurs numériques générées par les agents.

Ce vecteur de rang critique comporte uniquement des valeurs numériques et est très facile à manipuler par l'arbitre 105. Ce dernier n'a donc plus à se préoccuper d'autres contraintes spécifiques particulières relatives aux différents blocs fonctionnels.

Il s'ensuit une grande facilité à faire communiquer différents blocs ou unités fonctionnels, tels que les unités ou blocs 100 ou 101, tout en conservant le même mécanisme d'arbitrage 105.

D'une manière générale, le mécanisme d'arbitrage 105 est tout mécanisme connu, notamment les mécanismes à priorité fixe ou dynamique, les mécanismes connus d'un homme du métier sous l'appellation anglo-saxonne, ROUND ROBIN et ROUND ROBIN FAIR etc....

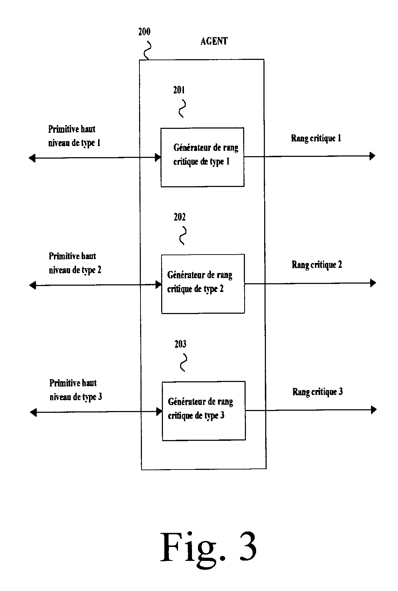

De préférence, comme cela est représenté sur la figure 3, l'agent génère un vecteur de rang critique, composé de préférence de trois composantes.

Dans la détermination de ce vecteur de rang critique, l'agent dispose d'une grande latitude. Il utilise non seulement les informations extraites des commandes de haut niveau transmises par le bloc fonctionnel auquel il est rattaché, mais également des informations internes et notamment le niveau de remplissage de sa mémoire FIFO, le cas échéant.

Il peut ainsi mettre en oeuvre toute stratégie dans la génération du vecteur de rang critique, stratégie dont n'a plus à se soucier le concepteur des blocs fonctionnels qui se satisfera de fixer les contraintes systèmes minimales qui seront transmises via le protocole de haut niveau au moyen des commandes adéquates.

L'agent peut en outre utiliser de multiples algorithmes pour assurer le contrôle du mécanisme d'arbitrage mis en oeuvre par le bloc 105.

Avec un vecteur de rang critique dont l'une des composantes évolue, dans le temps, suivant une rampe, l'agent est assuré de l'allocation de l'interconnect dans un certain délai, ce qui peut lui permettre de se conformer aux contraintes reçues par le bloc fonctionnel, et ce sans trop perturber le fonctionnement du mécanisme d'arbitrage.

Mais d'autres mécanismes sont envisageables en fonction de stratégies qui seront appliquées. Comme des mécanismes de limitation pour s'assurer qu'un bloc ne monopolise pas d'une manière indue les ressources de l'interconnect. Comme on le voit, une fois encore, l'invention permet une grande flexibilité dans la gestion du mécanisme d'arbitrage, flexibilité qui n'était pas permise dans les mécanismes connus.

Le vecteur de rang critique qui est généré par les agents peut ensuite être très facilement manipulé par un mécanisme d'arbitrage, qui voit arriver les vecteurs concurrents des différents agents.

III. Mécanisme d'arbitrage.

Un homme de métier pourra adapter tout mécanisme d'arbitrage à la manipulation des vecteurs de rang critiquegénérés par les différents agents concurrents sur le même interconnect.

De préférence, on réalise le bloc d'arbitrage 105 au moyen d'un dispositif d'extraction d'un maximum ou d'un minimum décrit ci- après. A cet effet, on fait intervenir une fonction de conversion ci-après désignée "transformée en T" telle que définie dans la demande de brevet Européen n° 03368126.3 déposée le 23 Décembre 2003 par le titulaire de la présente demande de brevet et ayant pour titre «Dispositif pour le traitement collectif de données», laquelle est incorporée dans la présente demande de brevet par simple référence. La conversion en T que l'on décrit dans cette demande de brevet permet de générer un codage intermédiaire de chacune des composantes B du vecteur de rang critique qui doit être manipulé.

Chaque composante B est elle-même considérée comme un vecteur sous la forme **B[n-1] B[n-2]** .... **B[2] B[1] B[0],** dans laquelle une relation d'ordre est définie, et est transformée en un nombre binaire composé de $2^n-1$ bits :

$$T[2^n-1]\ T[2^n-2]....\ T[x]\ ...\ T[2]\ T[1]\ \text{avec } x=1 \text{ à } 2^n-1$$

Où on a $T(x) = 0$ lorsque x est strictement supérieur à R et $T(x)= 1$ lorsque x est inférieur ou égal à R, R étant le rang du vecteur **B[n-1] B[n-2]** .... **B[2] B[1] B[0]** dans ladite relation d'ordre, à savoir, si l'on prend l'exemple de valeurs décimales :

$$R = B[n-1]x2^{(n-1)} + B[n-2]x2^{(n-2)} + ... + B[2]x2^2+ B[1]x2^1 + B[0]x2^0$$

On observe que cette définition du rang R confère à la présente transformée en T les particularités suivantes : en premier lieu, il y a une relation bijective entre le code binaire et sa transformée en T. En second lieu, un élément binaire quelconque $T(x)$ de la transformée en T est à «1» uniquement lorsque les bits de poids inférieur sont également à 1.

Ainsi, pour une composante B codée par exemple sur trois bits, on aura les correspondances suivantes :

| Code binaire initial | transformée en T | rang |
|---|---|---|
| 000 | 0000000 | 0 |
| 001 | 0000001 | 1 |
| 010 | 0000011 | 2 |
| 011 | 0000111 | 3 |
| 100 | 0001111 | 4 |
| 101 | 0011111 | 5 |
| 110 | 0111111 | 6 |
| 111 | 1111111 | 7 |

Cette conversion permet l'extraction d'un maximum entre plusieurs composantes présentées par des agents différents, tels que les agents 103 et 104. En effet, en se référant à la figue 4, on constate que l'on peut très facilement extraire - d'une manière ultra-rapide - la valeur maximale d'une composante parmi un ensemble de 8 composantes présentées par huit agents, tels que les agents 103 et 104 par exemple.

Alternativement, on peut envisager un deuxième type de transformée en T, basée sur la relation de rang définie précédemment, dont la valeur décimale «0» est transformée en une séquence de «0» et le bit LSB égal à 1. A titre d'illustration on montrera, ci-après, la correspondance pour cette deuxième définition de la transformée en T appliquée à des valeurs codées sur 4 bits :

| Code binaire initial | Transformée en T | rang |
|---|---|---|
| 0000 | 0000000000000001 | 0 |
| 0001 | 0000000000000011 | 1 |
| 0010 | 0000000000000111 | 2 |

(suite)

| Code binaire initial | Transformée en T | rang |
|---|---|---|
| 0011 | 0000000000001111 | 3 |
| 0100 | 0000000000011111 | 4 |
| 0101 | 0000000000111111 | 5 |
| 0110 | 0000000001111111 | 6 |
| 0111 | 0000000011111111 | 7 |
| 1000 | 0000000111111111 | 8 |
| 1001 | 0000001111111111 | 9 |
| 1010 | 0000011111111111 | 10 |
| 1011 | 0000111111111111 | 11 |
| 1100 | 0001111111111111 | 12 |
| 1101 | 0011111111111111 | 13 |
| 1110 | 0111111111111111 | 14 |
| 1111 | 1111111111111111 | 15 |

Alternativement, si l'on adopte la convention suivant laquelle:

T(x) = 1 lorsque x est strictement supérieur à R et T(x)=0 lorsque x est inférieur ou égal à R, avec R étant le rang dans le dit ensemble ordonné,

on obtient alors l'extraction d'un maximum au moyen d'un ET booléen, effectué bit à bit sur les bits de même indice de chacune des composantes à traiter, suivi d'une conversion inverse de ladite transformée. En combinant un OU booléen , effectué bit à bit sur les bits de même indice, suivi d'une conversion inverse de ladite transformée, on obtient, en un temps très court, l'extraction du minimum d'un ensemble de valeurs numériques.

Comme on le constate, la transformée en T présente l'aptitude à de nombreuses combinaisons et manipulations de données.

Si l'on s'en tient à la première définition de la transformée en T - celle suivant laquelle le décimal '0' correspond à la transformée «000000...00», on constate que l'on produit directement le rang de la valeur convertie à partir de l'addition des différents éléments binaires contenus dans cette dernière.

$$R = T[2^n-1] + T[2^n-2] + T[2^n-3] + ... + T[2] + T[1]$$

En outre, cette transformation en T peut être utilisée très avantageusement pour produire des circuits permettant des traitements collectifs de données ultra-rapides. Il en résulte alors une nouvelle classe de circuits électroniques conçus soit manuellement, soit à l'aide d'un outil de compilation et de synthèse logique, qui apporte un traitement particulièrement rapide des ensembles de données.

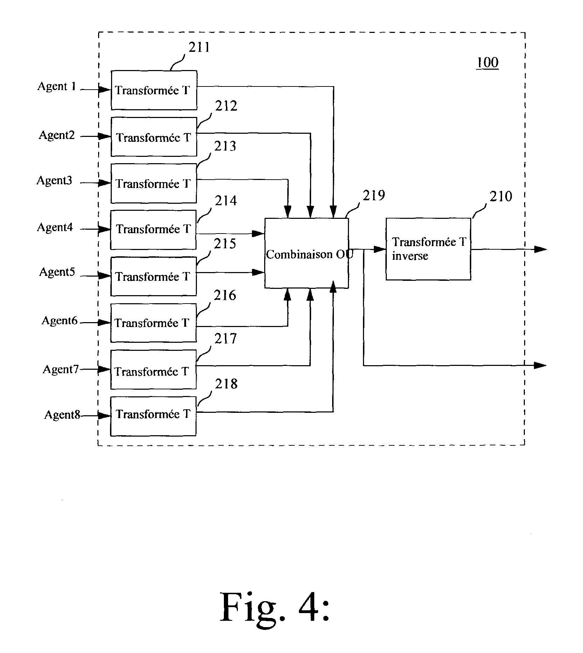

En se référant à la figure 4 on constate que chacune des huit composantes d'un vecteur de rang critique généré par les agents est transmise à l'entrée d'un circuit convertisseur, respectivement 211 à 218, lequel fournit en sortie la transformée en T correspondant à la valeur.

Les huit valeurs sont alors transmises à un circuit convertisseur 219 qui effectue un OU logique - bit à bit, sur les bits de même indice - entre les différentes valeurs fournies par les blocs 201 à 208. Le circuit 219 fournit alors en sortie une valeur qui est transformée par un circuit convertisseur 210 réalisant la conversion en T inverse.

On constate, qu'avec le schéma de la figure 4, toutes les conversions en T peuvent être effectuées en même temps et que par conséquent le traitement des huit valeurs peut être obtenu en seulement trois étapes. Le temps de traitement est indépendant du nombre de valeurs à traiter. Pour traiter 128 valeurs, par exemple, il suffit de prévoir un ensemble de 128 circuits de transformation en T.

On obtient ainsi, d'une manière extrêmement rapide, l'extraction du maximum d'un ensemble de données. Le rapport du gain en vitesse obtenu par l'invention est d'autant plus élevé que le nombre de données à traiter est important.

Un mécanisme d'arbitrage supplémentaire est nécessaire pour sélectionner de manière unique la demande de transfert à valider, lorsqu'il existe plusieurs valeurs maximales identiques dans l'ensemble des valeurs dont on extrait le maximum. Il peut être réalisé un utilisant tout mécanisme d'arbitrage déjà connu.

Le mécanisme d'extraction d'un maximum qui est décrit précédemment, est combiné au sein du bloc d'arbitrage 105 afin de permettre le traitement collectif des différentes composantes des vecteurs de rang critique générés par les différents agents.

D'une manière duale, on pourra effectuer l'extraction d'un minimum au moyen de la transformée en T, afin, notamment, de traiter une composante d'un vecteur critique représentatif, notamment, d'une contrainte de temps comme le temps restant avant satisfaction de la demande.

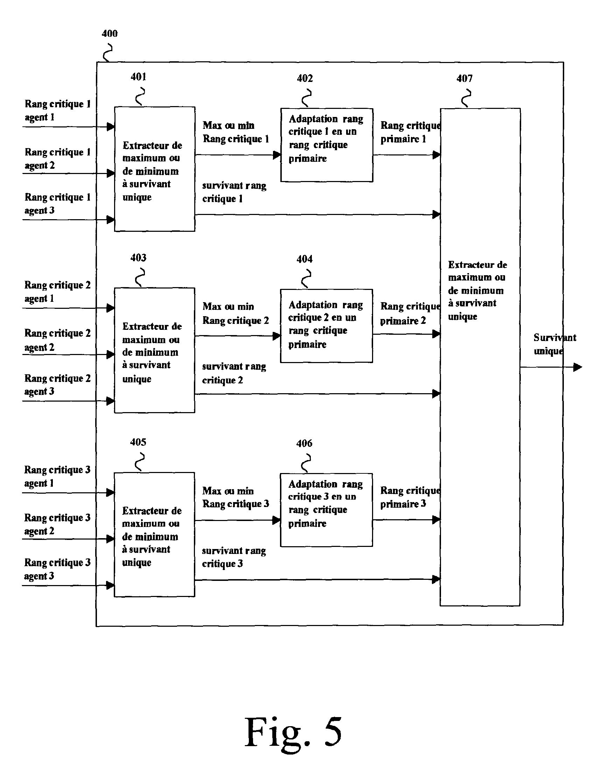

Ce traitement est schématisé dans la figure 5 où l'on voit la mise en concurrence de trois vecteurs de rang critique générés respectivement par trois agents au sein d'un bloc 400.

Un bloc 401 réalise l'extraction d'un maximum ou d'un minimum parmi une première composante RC1, issue respectivement des agents 1, 2 et 3. En sortie, on a l'identification de l'agent survivant, ainsi que la détermination de la valeur numérique de la composante considérée. Cette valeur est introduite dans un bloc 402 permettant de générer un rang critique primaire qui sera transmis à l'extracteur de maximum ou de minimum 407. Le bloc 402 permet de réaliser une adaptation du niveau de la valeur avant son traitement par le bloc 407. Dans un des modes de réalisation préférés, le bloc 402 comporte un élément de gain ou d'atténuation, un limiteur, voire un effet de seuil.

De la même manière, un bloc 403 permet l'extraction d'un maximum ou d'un minimum parmi une seconde composante RC2, issue respectivement de chacun des agents 1, 2 et 3. En sortie du traitement par 403, on a l'identification de l'agent survivant ainsi que la détermination de la valeur numérique de la composante considérée, laquelle est introduite dans un bloc 404, similaire au bloc 402 précédemment décrit.

Enfin, on complète la figure 5 par un bloc 405 qui effectue l'extraction du maximum ou du minimum des composantes RC3 issues respectivement de chacun des agents 1, 2 ou 3. En sortie du traitement, on a l'identification de l'agent survivant ainsi que la détermination de la valeur numérique de la composante considérée, laquelle est introduite dans un bloc 406, similaire aux blocs 402 et 404 précédents.

Le bloc d'extraction du maximum ou du minimum 407 permet ainsi d'effectuer un traitement en cascade pour identifier un survivant unique parmi les vecteurs de rang critique présentés par les différents agents et, par suite, l'allocation de l'interconnect ou de la ressource à allouer.

Comme on le voit, le mécanisme est extrêmement flexible et performant, notamment lorsque l'on tire avantage de la transformée en T mentionnée précédemment, laquelle apporte efficacité et vitesse d'exécution. Les agents gèrent de leur côté l'interprétation des contraintes systèmes et des commandes présentées par les blocs fonctionnels et l'arbitrage est effectué sur la base des seuls vecteurs de rang critique, faciles à manipuler comme on l'a vu.

Ainsi, l'utilisation d'un protocole de commande de haut niveau, traduit en un protocole de bas niveau par un agent à l'aide d'un vecteur de rang critique, associée à un mécanisme d'arbitrage utilisant l'extraction d'un maximum ou d'un minimum permet de réaliser un interconnect ; cela sépare les contraintes systèmes des différents blocs fonctionnels auquel est connecté le système et fournit un mécanisme d'arbitrage générique, adaptatif, dont les performances en transfert sont dynamiquement optimisées.

**Revendications**

1. Procédé d'arbitrage d'un dispositif de transport de données dans une architecture comportant n blocs fonctionnels, l'accès audit dispositif étant réglé par un bloc d'arbitrage, le procédé étant **caractérisé en ce qu'**il comporte :

   - au moins un agent échangeant, d'un desdits blocs fonctionnels, des informations via des primitives de haut niveau et générant en réponse un vecteur de rang critique comportant au moins une première et une seconde composantes ;
   - un arbitre recevant les vecteurs de rang critique générés par lesdits agents en concurrence, ledit arbitre appliquant un mécanisme d'arbitrage sur au moins l'une des deux composantes des vecteurs de rang critique pour identifier de manière unique le bloc accédant à ladite ressource.

2. Procédé d'arbitrage selon la revendication 1 **caractérisé en ce que** ledit arbitre applique un mécanisme d'extraction de maximum ou de minimum sur au moins l'une des deux composantes des vecteurs de rang critique pour identifier de manière unique le bloc accédant à ladite ressource.

3. Procédé d'arbitrage selon la revendication 1 **caractérisé en ce que** le protocole de haut niveau comporte des commandes permettant la transmission d'information de volume de donnée, de temps, de débit ou de latence minimale.

4. Procédé d'arbitrage selon la revendication 3 **caractérisé en ce que** le protocole de haut niveau comporte une commande permettant une purge destinée à purger des données en attente de transfert, en un temps maximal défini, et contenues dans l'un desdits agents, en acheminant ces données jusqu'à destination ou en les détruisant.

5. Procédé d'arbitrage selon la revendication 1 **caractérisé en ce que** ledit arbitre comporte une fonction d'adaptation agissant sur au moins l'une desdites composantes du vecteur de rang critique.

6. Procédé d'arbitrage selon la revendication 5 caractérisé en ce ladite fonction d'adaptation est du type limiteur, gain, décalage ou effet de seuil.

7. Procédé d'arbitrage selon la revendication 1 **caractérisé en ce que** ledit arbitre comporte au moins un premier et un second blocs d'arbitrage en cascade recevant respectivement l'une des dites première et seconde composantes dudit vecteur de rang critique.

8. Procédé d'arbitrage selon la revendication 7 **caractérisé en ce que** au moins un desdits premier et second blocs comporte une fonction d'adaptation.

9. Procédé d'arbitrage selon la revendication 1 **caractérisé en ce que** ledit arbitre comporte une fonction de conversion (transformée en T) de chacune des composantes dudit vecteur de rang critique, chaque composante étant sous la forme **B[n-1] B[n-2] .... B[2] B[1] B[0],** ladite fonction opérant sur un ensemble d'éléments dans lequel est définie une relation d'ordre et transformant chaque vecteur de rang critique en un nombre binaire composé de $2^n$-1 éléments binaires **T[x]** avec x = 1 à $2^n$-1:

$$T[2^n\text{-}1]\ T[2^n\text{-}2]\ ...T[x]\ ...\ T[2]\ T[1]$$

où on a T(x) = 0 lorsque x est strictement supérieur à R et T(x)=1 lorsque x est inférieur ou égal à R, avec R étant le rang du vecteur **B[n-1] B[n-2] .... B[2] B[1] B[0]** dans ladite relation d'ordre.

10. Procédé d'arbitrage selon la revendication 1 **caractérisé en ce que** ledit arbitre comporte une fonction de conversion (transformée en T) de chacune des composantes dudit vecteur de rang critique, chaque composante étant sous la forme **B[n-1] B[n-2] .... B[2] B[1] B[0]**, ladite fonction opérant sur un ensemble d'éléments dans lequel est définie une relation d'ordre et transformant chaque vecteur de rang critique en un nombre binaire composé de $2^n$-1 éléments binaires **T[x]** avec x = 1 à $2^n$-1:

$$T[2^n\text{-}1]\ T[2^n\text{-}21\ ...\ T[x]\ ...\ T[2]\ T[1]$$

où on a T(x) = 1 lorsque x est strictement supérieur à R et T(x)=0 lorsque x est inférieur ou égal à R; avec R étant le rang du vecteur **B[n-1] B[n-2] .... B[2] B[1] B[0]** dans ladite relation d'ordre.

11. Procédé d'arbitrage d'un dispositif de transport de données dans une architecture comportant n blocs fonctionnels communicant via des agents, lesdits agents générant des vecteurs de rang critique comportant au moins deux composantes élémentaires, le dit procédé comportant les étapes suivantes :

    - génération d'une requête à un agent alloué audit bloc fonctionnel, ladite requête comportant des informations de volume de données, de temps, de débit ou de latence minimale, suivant un protocole de haut niveau ;
    - conversion, par l'agent, de ladite requête en un vecteur comportant au moins une première et une seconde composantes ;
    - présentation des vecteurs de rang critique en concurrence à un bloc d'arbitrage doté d'un mécanisme d'extraction de maximum ou du minimum sur une au moins desdites composantes.

12. Architecture de produit semi-conducteur comportant un ensemble de blocs fonctionnels organisés autour d'un dispositif de transport de donnée ou «interconnect», lesdits blocs fonctionnels sollicitant de manière concurrence l'accès audit dispositif de transport de données, l'architecture étant **caractérisée en ce que** :

    - au moins un agent (103, 104) pour chacun des blocs fonctionnels, lesdits agents échangeant des informations via un protocole de haut niveau, comportant au moins des informations de volume de données, de temps, de débit ou de latence minimale et, interprétant ces informations pour générer un vecteur de rang critique comportant au moins deux composantes ;

- un bloc d'arbitrage (105) recevant lesdits vecteurs de rang critique et comportant des moyens d'extraction d'un maximum ou d'un minimum sur une au moins desdites composantes des vecteurs de rang critique.

**13.** Agent pour une architecture de produit semi-conducteur comportant un ensemble de blocs fonctionnels organisés autour d'un dispositif de transport de données ou «interconnect» , ledit agent permettant la communication avec un bloc fonctionnel et étant **caractérisé en ce qu'**il comporte :

des moyens pour recevoir dudit bloc fonctionnel des informations via un protocole de haut niveau comportant au moins des informations de volume de données, de temps, de débit ou de latence minimale et interprétant ces informations pour générer un vecteur de rang critique comportant au moins deux composantes et étant destiné à un mécanisme d'arbitrage d'extraction de maximum ou de minimum.

**14.** Agent selon la revendication 13 **caractérisé en ce qu'**il comporte des moyens permettant de fournir audit bloc fonctionnel des informations concernant l'exécution des commandes de haut niveau en cours de traitement.

Fig. 1

Fig. 2

200

AGENT

201

Primitive haut
niveau de type 1

Générateur de rang
critique de type 1

Rang critique 1

202

Primitive haut
niveau de type 2

Générateur de rang
critique de type 2

Rang critique 2

203

Primitive haut
niveau de type 3

Générateur de rang
critique de type 3

Rang critique 3

# Fig. 3

Fig. 4:

400

401

Rang critique 1
agent 1

Rang critique 1
agent 2

Rang critique 1
agent 3

**Extracteur de maximum ou de minimum à survivant unique**

Max ou min
Rang critique 1

402

**Adaptation rang critique 1 en un rang critique primaire**

Rang critique
primaire 1

407

survivant rang
critique 1

403

Rang critique 2
agent 1

Rang critique 2
agent 2

Rang critique 2
agent 3

**Extracteur de maximum ou de minimum à survivant unique**

Max ou min
Rang critique 2

404

**Adaptation rang critique 2 en un rang critique primaire**

Rang critique
primaire 2

**Extracteur de maximum ou de minimum à survivant unique**

Survivant
unique

survivant rang
critique 2

405

Rang critique 3
agent 1

Rang critique 3
agent 2

Rang critique 3
agent 3

**Extracteur de maximum ou de minimum à survivant unique**

Max ou min
Rang critique 3

406

**Adaptation rang critique 3 en un rang critique primaire**

Rang critique
primaire 3

survivant rang
critique 3

# Fig. 5

**EP 1 557 765 A1**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 199 124 B1 (RAMAKRISHNAN ET AL) 6 mars 2001 (2001-03-06) * colonne 3, ligne 9 - colonne 4, ligne 18 * * colonne 5, ligne 14 - ligne 62 * * colonne 6, ligne 46 - ligne 67 * * colonne 8, ligne 23 - colonne 9, ligne 45 * * colonne 11, ligne 12 - ligne 61 * * colonne 17, ligne 66 - colonne 19, ligne 6 * * figures 2-9 * ----- | 1-8, 11-14 | G06F13/364 |
| A | EP 0 380 092 A (KABUSHIKI KAISHA TOSHIBA) 1 août 1990 (1990-08-01) * page 2, ligne 41 - page 3, ligne 50 * * figures 1-3 * ----- | 1-14 | |
| A | US 6 092 137 A (HUANG ET AL) 18 juillet 2000 (2000-07-18) * colonne 2, ligne 7 - colonne 5, ligne 19; figure 2 * ----- | 1-14 | |

DOMAINES TECHNIQUES RECHERCHES (Int.Cl.7)

G06F

Le présent rapport a été établi pour toutes les revendications

| Lieu de la recherche | Date d'achèvement de la recherche | Examinateur |
|---|---|---|
| La Haye | 25 mai 2005 | McDonagh, F |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 36 8002

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-05-2005

| Document brevet cité au rapport de recherche | | Date de publication | Membre(s) de la famille de brevet(s) | | Date de publication |
|---|---|---|---|---|---|
| US 6199124 | B1 | 06-03-2001 | US<br>US | 5881313 A<br>5794073 A | 09-03-1999<br>11-08-1998 |
| EP 0380092 | A | 01-08-1990 | JP<br>JP<br>DE<br>DE<br>EP<br>KR<br>US | 2196362 A<br>2635750 B2<br>69028420 D1<br>69028420 T2<br>0380092 A2<br>9205290 B1<br>5230054 A | 02-08-1990<br>30-07-1997<br>17-10-1996<br>13-02-1997<br>01-08-1990<br>29-06-1992<br>20-07-1993 |
| US 6092137 | A | 18-07-2000 | AUCUN | | |

EPO FORM P0460